Europäisches Patentamt

European Patent Office

Office européen des brevets

(19)

(11) Publication number: **0 401 745**
**A2**

# EUROPEAN PATENT APPLICATION

(21) Application number: **90110608.8**

(51) Int. Cl.⁵: **G06F 9/42**

(22) Date of filing: **05.06.90**

(30) Priority: **05.06.89 JP 142522/89**

(43) Date of publication of application:
**12.12.90 Bulletin 90/50**

(84) Designated Contracting States:
**DE FR GB NL**

(71) Applicant: **MATSUSHITA ELECTRIC
INDUSTRIAL CO., LTD.**
**1006, Oaza Kadoma**

**Kadoma-shi Osaka 571(JP)**

(72) Inventor: **Miyazaki, Masaya**
**5-5-452, Okakaminocho-2-chome**
**Toyonaka-shi(JP)**

(74) Representative: **Patentanwälte Leinweber &
Zimmermann**
**Rosental 7/II Aufg.**
**D-8000 München 2(DE)**

(54) Data processor for high-speed access to stack area data.

(57) A data processor comprises a high-speed storage (1) for storing data of a stack area, a first pointer (11) for indicating a mapping position in the high-speed storage showing an address indicated by a stack pointer (102), a second pointer (12) for indicating a mapping position in the high-speed storage showing an address indicated by a frame pointer (105), an arithmetic unit (104) for operating a displacement designated by each instruction and the first and second pointers, and an update unit (33, 34, 42, 22, 35) for updating the first pointer provided separately from an update unit for updating the stack pointer upon execution of a PUSH or POP instruction. Instructions for accessing data using the displacement from the stack pointer or the frame pointer, together with the PUSH and POP instructions are executed at a high speed.

FIG. I

## BACKGROUND OF THE INVENTION

The present invention relates to a data processor with an enhanced access speed to data in a stack area providing a high-speed storage only for storing the data in the stack area.

A high-speed operation of a data processor operated by programs requires a high-speed access to data used by a subroutine. For realizing a high-speed access by software, there is provided a method in which the data used by a subroutine is held in high speed registers as much as possible. In view of the fact that the number of registers usable normally is limited, however, the problem is that before calling another subroutine, it is inevitable to save the registers holding the data to be used after execution of such a subroutine. For realizing the high-speed access by hardware, on the other hand, there is provided a method in which the data used by a subroutine is held in a stack area with a high-speed storage only for storing the stack area data.

A conventional data processor with a high-speed access to data in a stack area is diclosed, for example, in Am29000 32-Bit Streamlined Instruction Processor Users Manual, ADVANCED MICRO DEVICES, INC. This processor has an instruction format of three-operand type in which an operation of first and second operands is performed the result is stored in a third operand, and stack area data are designated by a diplacement from the address stored in a stack pointer. This processor, therefore, has three displacement designation sections in an instruction corresponding to the first, second and third operands respectively.

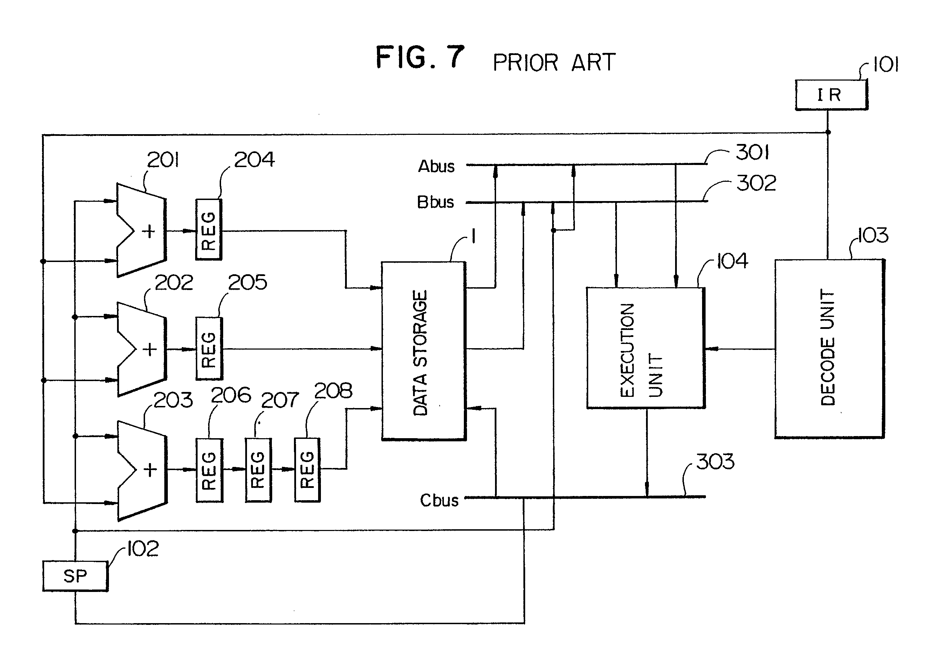

Fig. 7 shows a block diagram of a conventional data processor. Reference numeral 1 designates a data storage, numeral 101 an instruction register for storing an instruction, numeral 102 a stack pointer, numeral 103 a decode unit, numeral 104 an execution unit, numerals 201, 202, 203 adders, numerals 204, 205, 206, 207, 208 registers for pipeline processing numerals 301, 302 input buses to the execution unit 104, and numeral 303 an output bus from the execution unit 104.

In a conventional data processor configured as above, when an instruction for accessing the stack area data is stored in the instruction register 101, the instruction is decoded by the decode unit 103. At the same time, the adders 201, 202, 203 add the address stored in the stack pointer 102 to the contents of the displacement designation sections of the first, second and third operands respectively, and the outputs thereof are stored in the registers 204, 205 and 206 respectively. Then, the first and second operands are read out of the data storage 1, and applied to the buses 301 and 302 while being stored in an internal input register in the execution unit 104. At the same time, the address of the third operand that has thus far been stored in the register 206 is transferred to the register 207. Then, the execution unit 104 executes the operation designated by the instruction and the result thereof is stored in an internal output register, while transferring the address thus far stored in the register 207 to the register 208. Finally, the operation result is outputted to the bus 303, and is stored in the data storage 1 of the address outputted from the register 208.

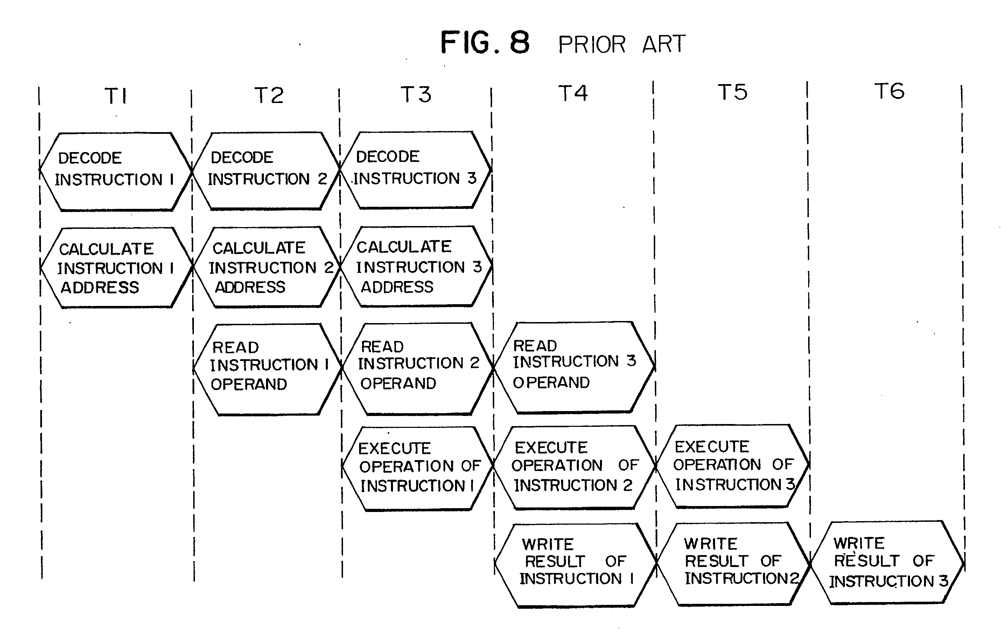

Now, an operation with a succession of instructions for accessing the stack area data will be explained. This conventional data processor, employing a pipeline processing system comprising four stages of decoding the instructions, reading the operands, executing the operations and storing the operation results, operates in a manner shown in Fig. 8. Specifically, a parallel processing of the stages permits the execution of each instruction substantially in a cycle. In the case where the operation result is read as an operand of the next instruction, a bypass circuit is used for applying the operation result as a direct input for the next operation.

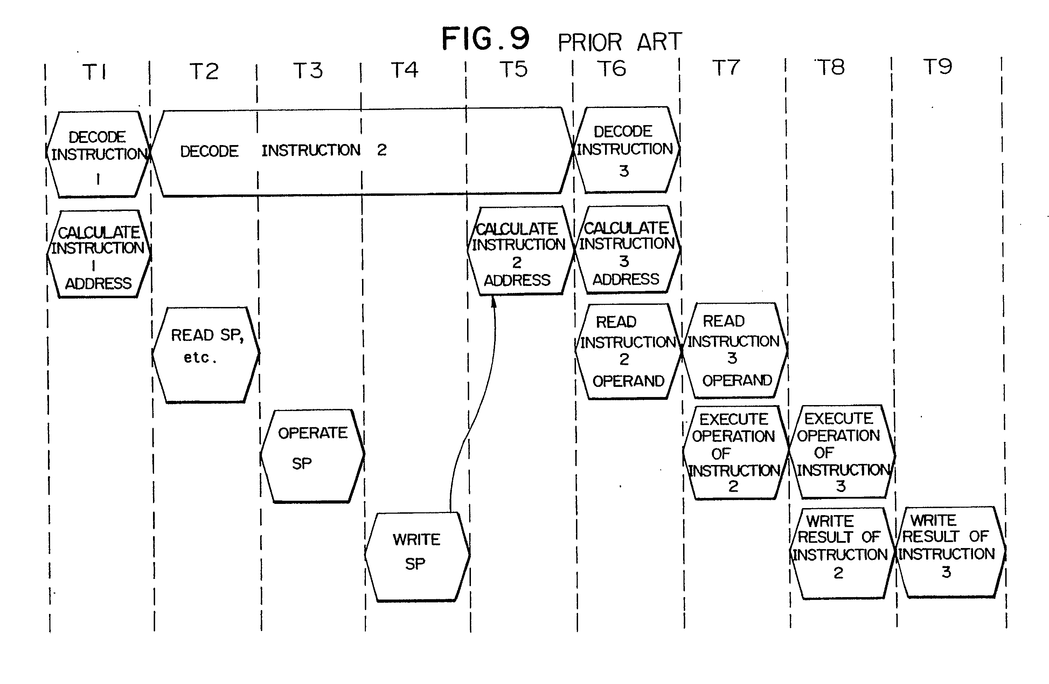

Explanation will be made about operations for executing an instruction for accessing the stack area data immediately after the execution of another instruction for changing the contents of the stack pointor 102. In Fig. 9 showing the related pipeline processing, an idle time of three cycles occurs from the fact that the address computation of the data storage 1 cannot be executed before the end of the change of the stack pointer 102.

In the case where the data used in a subroutine is held in a stack area, a method such as shown in "Microcomputer Hardware" by Iwao Morishita, at p.p. 61 to 71, for example, is often used for accessing the stack area data with a stack pointer and a frame pointer as a base register. Also, a push to the stack is executed for delivering a parameter to a subroutine or for temporarily saving a register, and a pop from the stack is executed for restoring the register. In that case, it is necessary to decrement or increment the content of the stack pointer by the size of the parameter or the register.

The above-mentioned configuration, however, has the problem that it is impossible to access a local variable of a subroutine at a high speed with a frame pointer as a base register. Also, a succession of pushes and pops for changing the contents of the stack pointer occurring before and after the subroutine call or return causes a number of idle states in the pipeline processing operation, resulting in a lower execution speed.

Further, immediately after a subroutine is called, the frame pointer that has been used for calling the subroutine is pushed to the stack in order to allocate a local variable space in the stack area, and the present content of the stack pointer is copied to the frame pointer and the content of the stack pointer is subtracted by the size of the local variable space. (This process is executed, for example, by a single instruction called LINK in Motorola's Microcomputer MC68000.) This process, generally called a stack frame making, has the problem that in view of the fact that the updating of the stack pointer is executed last of all, an execution of an instruction for accessing a stack area data immediately thereafter would cause an idle state of the pipeline processing, thereby leading to a reduced execution speed.

SUMMARY OF THE INVENTION

A first object of the present invention is to provide a data processor in which data in a stack area is capable of being accessed at a high speed with a frame pointer as a base register and the execution speed is not decreased by a succession of pushes or pops.

In order to achieve the above-mentioned object, there is provided, according to one aspect of the present invention, a data processor comprising a stack pointer, a frame pointer, a data storage capable of being read at least two data therefrom and being written at least one data thereto simultaneously, a first decode unit for decoding instructions for changing the contents of the stack pointer or the frame pointer, each instruction having at least one operand designating section including a displacement designating section, a first pointer for indicating a first mapping position in the data storage where an address indicated by the stack pointer is mapped, a second pointer for indicating a second mapping position in the data storage where an address indicated by the frame pointer is mapped, a first arithmetic unit for operating the contents of the displacement designation section of the instruction and the contents of the first pointer, a second arithmetic unit for operating the contents of the displacement designation section of the instruction and the contents of the second pointer, a third arithmetic unit for operating the contents of the first pointer and one of predetermined constants, a first pointer update unit for writing the output of the third arithmetic unit into the first pointer, a second pointer update unit for writing the first mapping position into the first pointer, and a third pointer update unit for writing the second mapping poistion into the second pointer, wherein the mapping position where an address with a displacement added to the address stored in the frame pointer as designated by the instruction is to be mapped in the data storage is determined by the output of the second arithmetic unit, thereby making possible a high-speed access to the data in the stack area with the frame pointer as a base register. Also, upon execution of a push or pop instruction, even when the output of the third arithmetic unit is written into the first pointer by the first update unit before the stack pointer is decremented or incremented and an instruction for accessing the stack pointer is executed immediately thereafter, the immediately subsequent instruction may be executed without causing any idle state of the pipeline processing by use of the updated first pointer.

A second object of the present invention is to increase the speed of stack frame making of a subroutine.

In order to achieve the above-mentioned object, according to another aspect of the present invention, there is provided a data processor wherein upon execution of a stack frame making instruction, the output of the fourth arithmetic unit is written in the first pointer by the fourth update unit, and the output of the third arithmetic unit is written in the second pointer by the fifth update unit, so that even when an instruction is executed for accessing the stack pointer or the frame pointer immediately thereafter, an immediately subsequent instruction is executed without causing any idle state of the pipeline processing by use of the updated first or second pointer.

BRIEF DESCRIPTION OF THE DRAWINGS

Fig. 1 is a block diagram showing a data processor according to a first embodiment of the present invention.

Fig. 2 is a block diagram showing a data processor according to a second embodiment of the present invention.

Fig. 3 is a timing chart for the pipeline processing for successive execution of instruction for operating the first operand designated in the stack pointer relative indirect addressing mode and the second operand designated in the frame pointer relative indirect addressing mode and storing the result thereof in the second operand in a data processor according to the first embodiment of the present invention.

Fig. 4 is a timing chart for the pipeline processing for successive execution of PUSH instructions in a data processor according to an embodiment of the present invention.

Fig. 5 is a timing chart of the pipeline processing for successive execution of POP instructions according to the first embodiment of the present invention.

Fig. 6 is a timing chart of the pipeline processing for executing an instruction for using the stack pointer or the frame pointer for address computation immediately after executing a stack frame making instruction according to the second embodiment of the present invention.

Fig. 7 is a block diagram showing a conventional data processor.

Fig. 8 is a timing chart of the pipeline processing for executing a normal operation in a conventional data processor.

Fig. 9 is a timing chart of the pipeline processing for executing an instruction for using the stack pointer for address calculation immediately after executing an instruction for changing the contents of the stack pointer in a conventional data processor.

## DESCRIPTION OF THE PREFERRED EMBODIMENTS

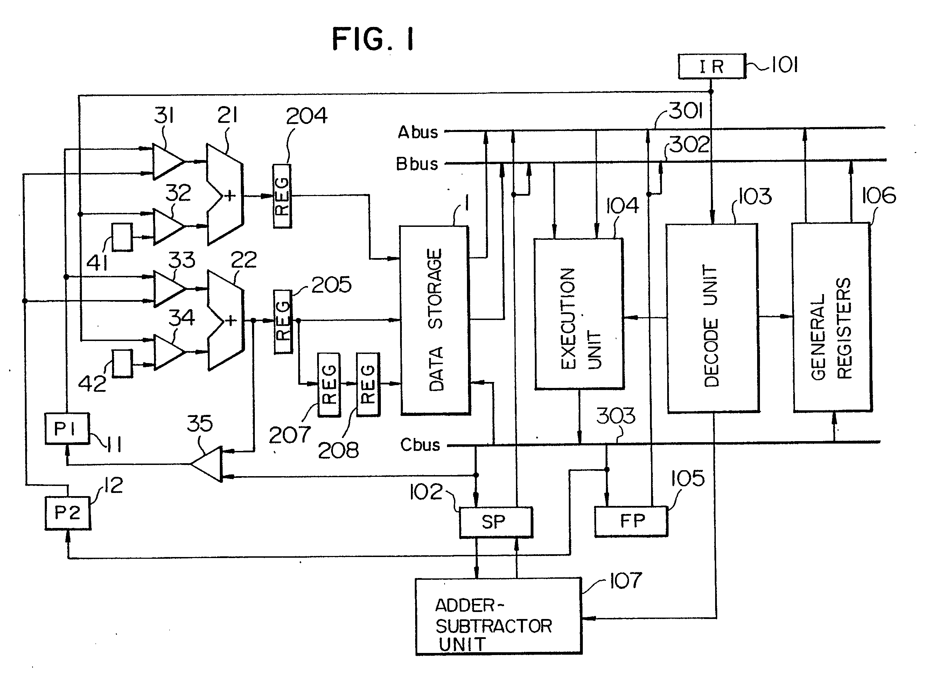

Fig. 1 is a block diagram showing a data processor according to a first embodiment of the present invention. In Fig. 1, reference numeral 1 designates a three-port data storage adapted to read two data and write a data at the same time, numeral 11 a first pointer, numeral 12 a second pointer, numerals 21, 22 adders, numerals 31, 32, 33, 34, 35 selectors, numerals 41, 42 constant generator, numeral 101 an instruction register, numeral 102 a stack pointer, numeral 103 a decode unit, numeral 104 an execution unit, numeral 105 a frame pointer, numeral 106 general registers, numeral 107 adder-subtractor unit for adding or subtracting a predetermined constant, numerals 204, 205, 207, 208 registers for pipeline processing, numerals 301, 302 input buses to the execution unit 104, and numeral 303 an output bus from the execution unit 104. According to the present embodiment, the first, second and third arithmetic units described in claim 1 are realized by a single adder by providing a selector for switching the inputs thereto and a constant generator.

The data processor according to the first embodiment includes an instruction format of two-operand type by which first and second operands are operated and stored again in the second operand. There are available a stack pointer relative indirect addressing mode for designating an address by the displacement from the address stored in the stack pointer, and a frame pointer relative indirect addressing mode for designating an address by the displacement from the address stored in the frame pointer. Also, this data processor has a PUSH instruction for writing a data in an address indicating the stack pointer after decrementing the contents of the stack pointer by the size of the data to be written, and a POP instruction for reading a data from an address indicating the stack pointer and incrementing the contents of the stack pointer by the size of the read data. The stack area data are aligned along the four byte boundary and accessed in a unit of 4 bytes.

According to the first embodiment, the data storage has a capacity of 256 bytes, with an entry size of four bytes, and the data stored in the entry is addressed by the third to eighth bits from the least significant order of an effective address. As a result, the first pointer 11 and the second pointer 12 normally hold the value of the third to eighth bits from the least significant order of the stack and frame pointers.

The operation of a data processor according to the first embodiment configured as explained above will be explained below.

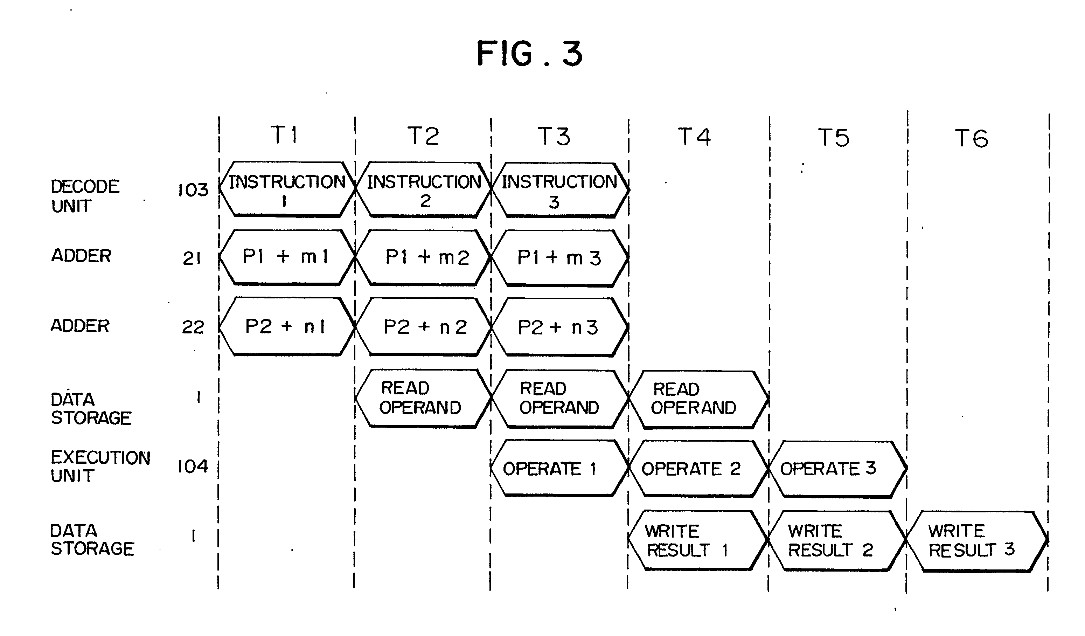

First, reference is made to the operation of executing an instruction for operating the first operand designated in the stack pointer relative indirect addressing mode and the second operand designated in the frame pointer relative indirect addressing mode, and storing the result thereof in the second operand. When an instruction is stored in the instruction register 101, the instruction is decoded by the decode unit 103. At the same time, the selector 31 selects an output of the first pointer 11, and the selector 32 the displacement designation section of the first operand of the instruction stored in the instruction register 101, the selector 33 an output of the second pointer 12, and the selector 34 the displacement designation section of the second operand of the instruction stored in the instruction register 101. The adder 21 determines the address of the first operand of the data storage 1 by adding the outputs of the selectors 31 and 32, which address is stored in the register 204, and the adder 22 adds the outputs of the selectors 33 and 34, so that the address of the second operand of the data storage 1 is determined which address is stored in the register 205. Then, the data on the address indicated by the registers 204 and 205 of the data storage 1 are read out and applied to the buses 301 and 302. These data are stored in internal input registers in the execution unit 104 respectively, and at the same time, the contents of the register 205 are transferred to the register 207. Then, the operation designated by the instruction is executed in the execution unit 104, and the result of operation is stored in an internal output register in the execution unit 104, while the contents of the register 207 are transferred to the register 208 at the same time. Finally, the result of operation is outputted to the bus 303, and is written in the data storage 1 of the address indicated by the register 208. The aforementioned process is executed by the pipeline processing. The pipeline processing operation for successive execution of similar instructions is shown in Fig. 3.

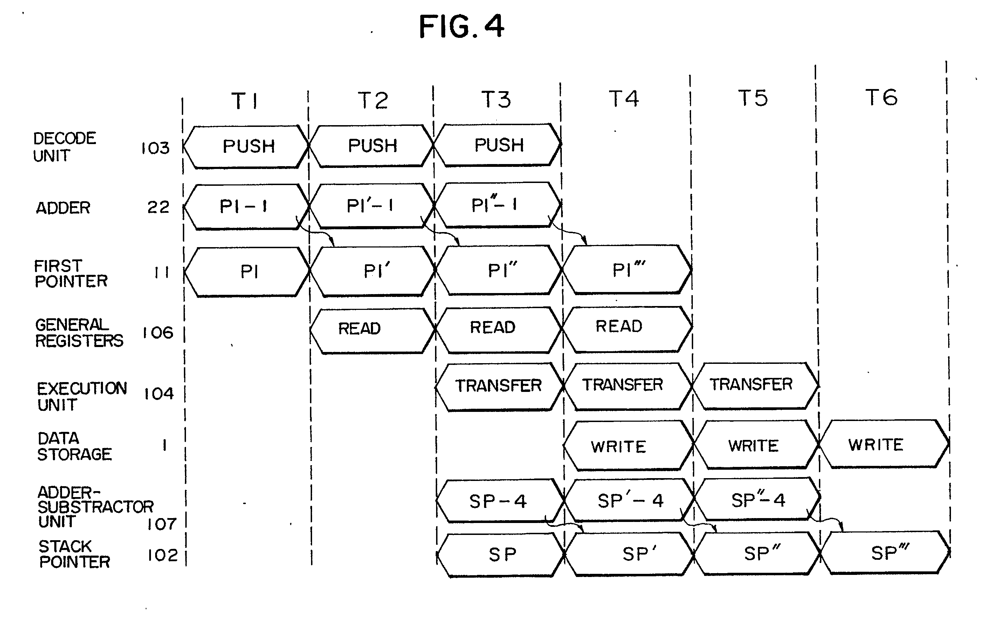

Now, the operation of executing an instruction for pushing one of four-byte general registers to the stack will be explained. First, when an instruction is stored in the instruction register 101, the decode unit 103 decodes the instruction, and the number of the register to be pushed is outputted to the general registers 106. At the same time, the selector 33 selects the first pointer 11, the selector 34 selects -1 produced by the constant generator 42, and the selector 35 an output of the adder 22. The adder 22 adds the outputs of the selectors 33 and 34 thereby to determine an address of the data storage 1 for pushing a general register thereto, which address is stored in the register 205 and the first pointer 11. At this time point, the first pointer 11 holds a value necessary for address calculation of the data storage 1 for the next instruction, so that an idle state in the pipeline processing operation does not occur even when the next instruction is for accessing the stack pointer to calculate address. As the next step, the contents of one of the general registers 106, designated by the instruction, are outputted to the bus 301, and at the same time that they are stored in the internal input register in the execution unit 104, the contents of the register 205 are transferred to the register 207 and the contents of the stack pointer 102 are transferred to the internal input register in the adder-subtractor unit 107. As the next step, the contents of the internal input register in the execution unit 104 are transferred to the internal output register in the execution unit 104, while at the same time the contents of the register 207 are transferred to the register 208. In the adder-subtractor unit 107, 4 is subtracted from the contents of the stack pointer stored in the internal input register and the result thereof is stored in the internal output register in the adder-subtractor unit 107. Finally, the contents of the general register designated are outputted to the bus 303 and written in an address indicated by the register 208 of the data storage 1. At the same time, the contents of the output register in the adder-subtractor unit 107 are written into the stack pointer 102. The aforementioned process is also executed by the pipeline processing. The pipeline processing operation for executing PUSH instructions successively is shown in Fig. 4. In the absence of the adder-subtractor unit 107 unlike in the first embodiment, the execution of a PUSH instruction requires two cycles by subtracting 4 from the contents of the stack pointer at the execution unit 104, although the fact remains that no idle state occurs in executing an instruction for accessing the stack pointer immediately after executing the PUSH instruction.

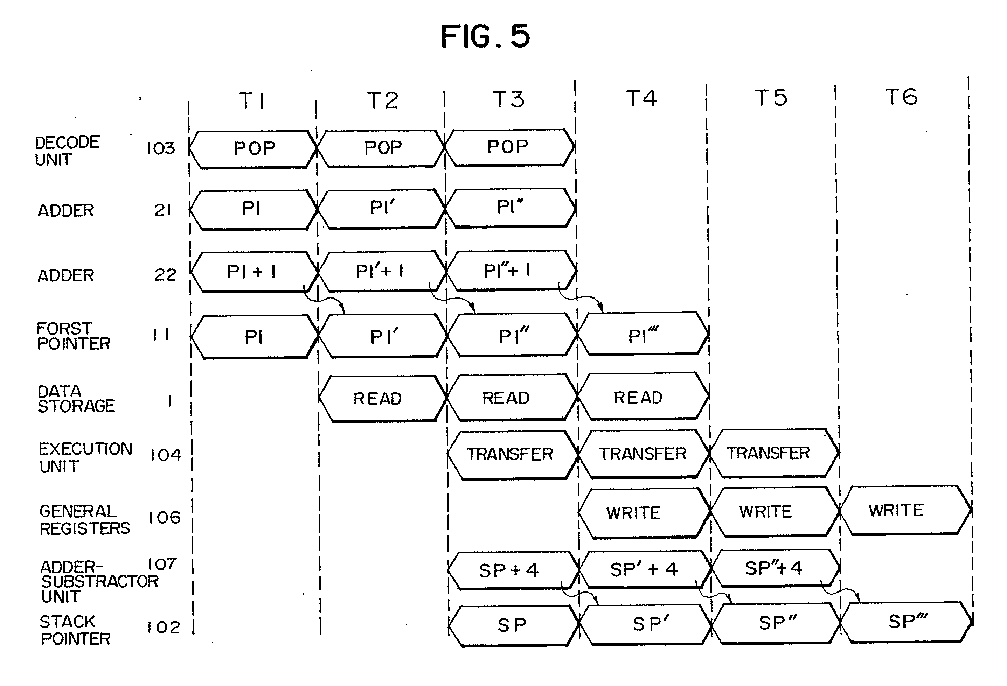

Now, explanation will be made about the operation of executing an instruction for popping a data from the stack into one of the four-byte general registers. First, when an instruction is stored in the instruction register 101, the instruction decode unit 103 decodes the instruction, so that the number of the register for storing the popped data is outputted to the general registers 106. At the same time, the selector 31 selects the first pointer 11, the selector 32 selects 0 produced by the constant generator 41, the selector 33 the first pointer 11, the selector 34 selects 1 produced by the constant generation means 42, and the selector 35 the output of the adder 22. The adder 21 determines the popped address (the one indicated by the first pointer) of the data storage 1 by adding the outputs of the selectors 31 and 32 to each other, which address is stored in the register 204. The adder 22, on the other hand, determines the address of the data storage 1 indicated by the stack pointer after execution of a POP instruction by adding the outputs of the selectors 33 and 34 to each other, which address is stored in the first pointer 11. At this time point, the first pointer holds a value required for calculating the address of the data storage 1 for the next instruction, so that even if the next instruction is one for using the stack pointer for the address calculation, no idle state occurs in the pipeline processing operation. Then, the data of the address indicated by the register 204 of the data storage 1 is read out, outputted to the bus 301 and stored in the internal input register in the execution unit 104, while at the same time the contents of the stack pointer 102 are transferred to the internal output register in the adder-subtractor unit 107. The contents of the internal input register in the execution unit 104 are transferred to the internal output register therein, while 4 is added to the contents of the stack pointer stored in the internal register in the adder-subtractor unit 107 and stored in the internal output register therein at the same time. Finally, the popped data is outputted to the bus 303, and is written into the designated one of the general registers 106, while the contents of the internal output register in the adder-subtractor unit 107 are written into the stack pointer 102 at the same time. These processes are also executed by the pipeline processing system, and the pipeline processing operation for successive execution of POP instructions is shown in Fig. 5. In the case where an adder-subtractor unit 107 is lacking unlike in the first embodiment, the execution of the POP instructin requires two cycles by adding 4 to the contents of the stack pointer in the execution unit 104, although the fact remains that no idle state occurs when an instruction for using the stack pointer for address calculation is executed immediately after executing the POP instruction.

If immediately after changing the stack pointer or the frame pointer by an instruction other than the PUSH or POP instruction, another instruction is executed for accessing them for address calculation, however, the stack pointer 102 or the frame pointer 105 has to be updated while at the same time updating the first pointer 11 or the second pointer 12, so that an idle state occurs in the pipeline processing operation as in the prior art. However, owing to a relatively small frequency of executing such instructions, compared to the PUSH and PIP instructions, no big problem arises. Also, in the case where the data on memory is accessed in other than the stack pointer relative indirect addressing mode or the frame pointer relative indirect addressing mode, the data of the particular address is read after execution of the address calculation at the execution unit 104, and therefore a long time is required for execution.

According to the first embodiment, as described above, the means for adding a second pointer and the contents of the displacement designating section of the instruction permits a high-speed access to the data in a stack area with the frame pointer as a base register. Also, the availability of means for adding the first pointer to a predetermined constant and means for writing the output thereof in the first pointer makes it possible to execute an instruction for using the stack pointer for address calculation without causing any idle state in the pipeline processing operation immediately after execution of an instruction such as PUSH or POP which changes the stack pointer. In the first embodiment, instead of realizing the first, second and third arithmetic units in claim 1 by two selectors, one constant generator and one adder, a plurality of adders (arithmetic units) may be provided with outputs thereof selected appropriately or various other combinations of arithmetic units and selectros may be used without departing from the spirit of the invention.

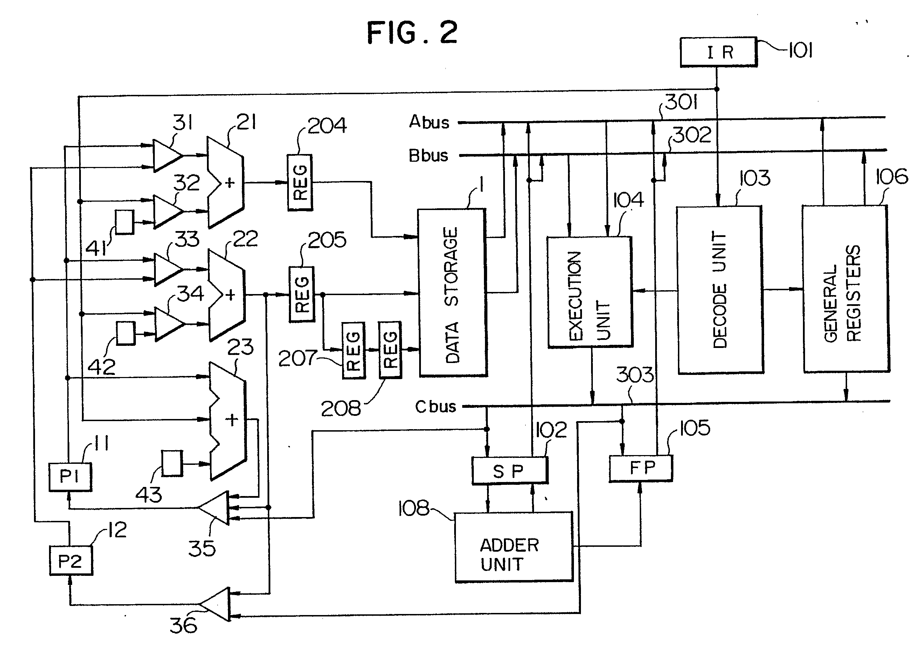

Fig. 2 is a block diagram showing a data processor according to the second embodiment described in claim 2. In Fig. 2, numeral 23 designates a third adder, numeral 42 constant generator, numeral 36 a sixth selector, and numeral 108 an adder unit having the function of adding the contents of the stack pointer to a predetermined constant on the one hand and adding the result of this addition to a local variable area designating section of an instruction on the other hand. All the other component elements are identical to those elements designated by corresponding numerals in Fig. 1. In this embodiment, a three-input adder is used as the third arithmetic unit described in claim 2.

The data processor according to the second embodiment has an instruction format similar to the one for the first embodiment, with a stack frame making instruction for performing, with a single instruction, a plurality of processes of pushing the frame pointer to the stack, copying the contents of the decremented stack pointer after having been pushed to the frame pointer, and adding to the contents of the stack pointer by a designated value.

The operation of the data processor according to the second embodiment having a configuration described above will be explained below.

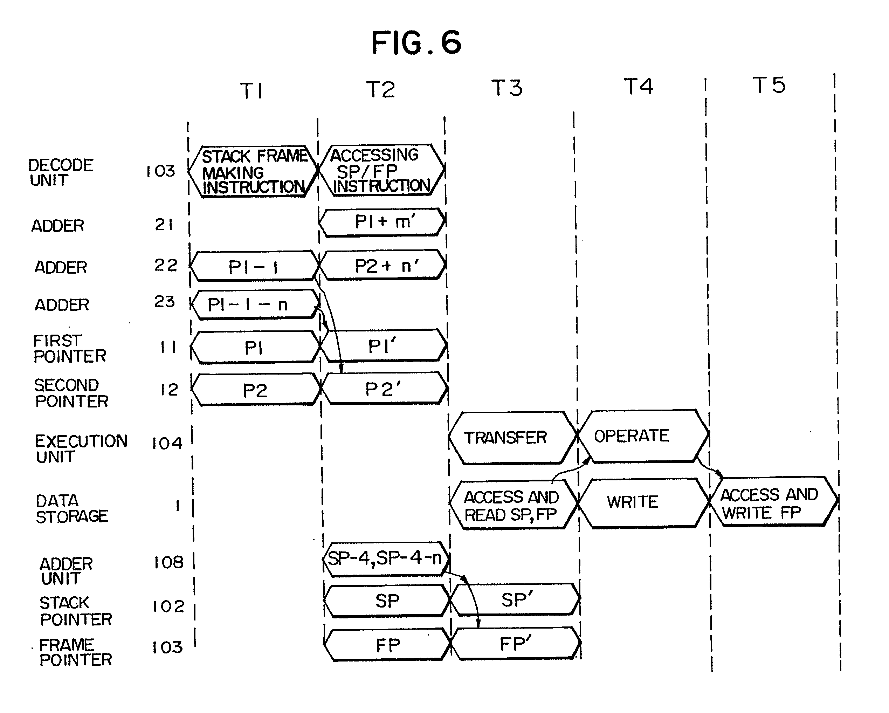

A stack frame making instruction is decoded by the decode unit 103, when stored in the instruction register 101. At the same time, the selector 33 selects the first pointer 11, the selector 34 selects -1 produced by the constant generator 42, the selector 35 selects the adder 23, the selector 36 selects the adder 22, and the constant generator 43 produces -1. The adder 22 adds the outputs of the selectors 33 and 34 thereby to determine an address of the data storage 1 for pushing the frame pointer 105 thereto, which address is stored in the register 205 and the second pointer 12. At this time, the output of the first pointer 11, the local variable area designating section of the instruction stored in the instruction register 101 which designates a value (negative) for allocating the local variable area, and the output of the constant generator 43 are added by the adder 23 to each other, with the sum stored in the first pointer 11. At this time, the first pointer 11 and the second pointer 12 hold a value required for calculating the address of the data storage 1 for the next instruction, so that the pipeline processing does not become idle even if the next instruction is the one for accessing the stack pointer or the frame pointer for an address calculation. Then, the contents of the frame pointer 105 are outputted to the bus 301 and stored in the internal input register in the execution unit 104, while the contents of the stack pointer 102 are transferred to the internal input register in the adder unit 108. At the same time, the contents of the register 205 are transferred to the register 207. The contents of the internal input register are transferred to the internal output register in the execution unit 104. The adder unit 108 adds -4 to the contents of the stack pointer stored in the internal register and the sum is stored in the first internal output register therein, while the contents of the stack pointer stored in the input register and -4 are added to the local variable area designating section of the instruction stored in the instruction register and are stored in the internal second output register. At the same time, the contents of the register 207 are transferred to the register 208. Finally, the contents of the frame pointer stored in the internal output register in the execution unit 104 are written in an address of the data storage 1 indicated by the register 208, while at the same time the contents of the first internal output register in the adder unit 108 are written in the frame pointer 105, and the contents of the second internal output register in the adder unit 108 are written in the stack pointer 102. These processes are also executed by the pipeline processing system. Fig. 6 shows the pipeline processing operation of executing an instruction for operating the first operand designated in the stack pointer relative indirect addressing mode and the second operand designated in the frame pointer relative indirect addressing mode and then storing the result of the operation in the second operand immediately after execution of a stack frame making instruction. In the absence of the adder unit 108 unlike in the second embodiment, the execution of the stack frame making instruction requires three cycles as -4 is added to the contents of the stack pointer in the execution unit 104 and stored in the frame pointer, and the sum is further added to a value designated by the instruction, although the fact remains that no idle state is caused by execution of an instruction for accessing the stack pointer or the frame pointer for an address calculation immediately after execution of the stack frame making instruction.

According to the second embodiment, providing means for adding a first pointer, the content the local variable area designating section of the instruction and a predetermined constant to each other and means for writing the output of a third arithmetic unit in a second pointer, an instruction for accessing a stack pointer or a frame pointer for an address calculation is executed without causing any idle state in the pipeline processing operation immediately after execution of the stack frame making instruction.

It will thus be understood from the foregoing description that according to a first aspect of the present invention described in claim 1, the data in a stack area used by a subroutine is accessed at a high speed with a frame pointer as a base register, so that the pipeline processing operation does not become idle even when an instruction for using the stack pointer for address calculation is executed immediately after execution of an instruction involving the updating of the stack pointer like PUSH or POP, thereby preventing any reduction in execution speed for a great practical effect.

According to another aspect of the present invention described in claim 2, no idle state of the pipeline processing operation is caused even when an instruction for accessing a stack pointer or a frame pointer for an address calculation is executed immediately after execution of a stack frame making instruction, and therefore the execution speed is not adversely affected, thereby leading to a great practical effect.

## Claims

1. A data processor comprising:
a stack pointer (102);
a frame pointer (105) for indicating a base address of a local variable area for a subroutine in a stack area;
a data storage (1) capable of being read at least two data therefrom and being written at least one data thereto at the same time;
a first decode unit (103) for decoding instructions for changing the contents of the stack pointer or the frame pointer, each instruction having at least one operand designating section including a displacement designating section;
a data pointer (11) for indicating a first mapping position in the data storage where an address indicated by the stack pointer is mapped;
a second pointer (12) for indicating a second mapping position in the data storage where an address indicated by the frame pointer is mapped;
at least one first arithmetic unit (104) for operating the contents of the first pointer and the contents of the displacement designating section of the instruction;
at least one second arithmetic unit (104) for operating the contents of the second pointer and the contents of the displacement designating section of the instruction;
at least one third arithmetic unit (104) for operating the contents of the first pointer and a first predetermined constant;
first pointer update means (33, 34, 42, 22, 35) for writing the output of the third arithmetic unit into the first pointer;
second pointer update means (301, 302, 104, 303, 35) for writing the first mapping position into the first pointer; and,
third pointer update means (301, 302, 104, 303) for writing the second mapping position into the second pointer;
wherein the contents of the first pointer are updated by the first pointer update means upon execution of predetermined one of the instructions for changing the contents of the stack pointer, the contents of the first pointer are updated by the second pointer update means before the contents of the stack pointer are changed when another of the instructions for changing the contents of the stack pointer is executed, and the second pointer is updated by the third pointer update means upon execution of the instruction for changing the contents of the frame pointer.

2. A data processor according to claim 1, further comprising:
a second decode unit (103) for decoding a stack frame making instruction having a local variable area designating section, the stack frame making instruction pushing the frame pointer to the stack area, copying the contents of the stack pointer to the frame pointer after the frame pointer has been pushed and changing the contents of the stack pointer for allocating the local variable area for a subroutine according to the value of the local variable area designating section;

a fourth arithmetic unit (104) for operating the contents of the first pointer, the contents of the local variable area designating section of the stack frame making instruction and a second predetermined constant;

fourth pointer update means (43, 23, 35) for writing the output of the fourth arithmetic unit into the first pointer; and,

fifth pointer update means (33, 34, 42, 22, 36) for writing the output of the second arithmetic unit into the second pointer;

wherein when the stack frame making instruction is executed, the contents of the first pointer are changed by the fourth update means before the contents of the stack pointer are updated and the contents of the second pointer are changed by the fifth pointer update means.

# FIG. 1

EP 0 401 745 A2

FIG. 2

EP 0 401 745 A2

# FIG.3

| | | T1 | T2 | T3 | T4 | T5 | T6 |
|---|---|---|---|---|---|---|---|
| DECODE UNIT | 103 | INSTRUCTION 1 | INSTRUCTION 2 | INSTRUCTION 3 | | | |
| ADDER | 21 | P1 + m1 | P1 + m2 | P1 + m3 | | | |
| ADDER | 22 | P2 + n1 | P2 + n2 | P2 + n3 | | | |
| DATA STORAGE | 1 | | READ OPERAND | READ OPERAND | READ OPERAND | | |
| EXECUTION UNIT | 104 | | | OPERATE 1 | OPERATE 2 | OPERATE 3 | |
| DATA STORAGE | 1 | | | | WRITE RESULT 1 | WRITE RESULT 2 | WRITE RESULT 3 |

EP 0 401 745 A2

FIG. 4

EP 0 401 745 A2

# FIG. 5

| | | T1 | T2 | T3 | T4 | T5 | T6 |
|---|---|---|---|---|---|---|---|
| DECODE UNIT | 103 | POP | POP | POP | | | |
| ADDER | 21 | PI | PI′ | PI″ | | | |
| ADDER | 22 | PI + 1 | PI′+ 1 | PI″+ 1 | | | |
| FORST POINTER | 11 | PI | PI′ | PI″ | PI‴ | | |
| DATA STORAGE | 1 | | READ | READ | READ | | |
| EXECUTION UNIT | 104 | | | TRANSFER | TRANSFER | TRANSFER | |
| GENERAL REGISTERS | 106 | | | | WRITE | WRITE | WRITE |
| ADDER-SUBSTRACTOR UNIT | 107 | | | SP + 4 | SP′ + 4 | SP″+ 4 | |
| STACK POINTER | 102 | | | SP | SP′ | SP″ | SP‴ |

EP 0 401 745 A2

# FIG. 6

|  | | T1 | T2 | T3 | T4 | T5 |
|---|---|---|---|---|---|---|

DECODE UNIT 103 — STACK FRAME MAKING INSTRUCTION | ACCESSING SP/FP INSTRUCTION

ADDER 21 — PI + m′

ADDER 22 — PI − l | P2 + n′

ADDER 23 — PI − l − n

FIRST POINTER 11 — PI | PI′

SECOND POINTER 12 — P2 | P2′

EXECUTION UNIT 104 — TRANSFER | OPERATE

DATA STORAGE 1 — ACCESS AND READ SP,FP | WRITE | ACCESS AND WRITE FP

ADDER UNIT 108 — SP-4,SP-4-n

STACK POINTER 102 — SP | SP′

FRAME POINTER 103 — FP | FP′

EP 0 401 745 A2

# FIG. 7   PRIOR ART

IR ~101

201   204
REG

202   205
REG

203   206  207  208
REG  REG  REG

DATA STORAGE

Abus ~301
Bbus ~302

EXECUTION UNIT ~104

DECODE UNIT ~103

Cbus ~303

SP ~102

EP 0 401 745 A2

# FIG. 8 PRIOR ART

| T1 | T2 | T3 | T4 | T5 | T6 |
|---|---|---|---|---|---|

DECODE INSTRUCTION 1 | DECODE INSTRUCTION 2 | DECODE INSTRUCTION 3

CALCULATE INSTRUCTION 1 ADDRESS | CALCULATE INSTRUCTION 2 ADDRESS | CALCULATE INSTRUCTION 3 ADDRESS

READ INSTRUCTION 1 OPERAND | READ INSTRUCTION 2 OPERAND | READ INSTRUCTION 3 OPERAND

EXECUTE OPERATION OF INSTRUCTION 1 | EXECUTE OPERATION OF INSTRUCTION 2 | EXECUTE OPERATION OF INSTRUCTION 3

WRITE RESULT OF INSTRUCTION 1 | WRITE RESULT OF INSTRUCTION 2 | WRITE RESULT OF INSTRUCTION 3

EP 0 401 745 A2

## FIG.9 PRIOR ART

| | T1 | T2 | T3 | T4 | T5 | T6 | T7 | T8 | T9 |
|---|----|----|----|----|----|----|----|----|----|

DECODE INSTRUCTION 1

CALCULATE INSTRUCTION 1 ADDRESS

DECODE INSTRUCTION 2

READ SP, etc.

OPERATE SP

WRITE SP

CALCULATE INSTRUCTION 2 ADDRESS

DECODE INSTRUCTION 3

CALCULATE INSTRUCTION 3 ADDRESS

READ INSTRUCTION 2 OPERAND

READ INSTRUCTION 3 OPERAND

EXECUTE OPERATION OF INSTRUCTION 2

EXECUTE OPERATION OF INSTRUCTION 3

WRITE RESULT OF INSTRUCTION 2

WRITE RESULT OF INSTRUCTION 3